# EUROPEAN PATENT APPLICATION

(11) **EP 4 507 330 A1**
(43) Date of publication of application: **12.02.2025**
(21) Application number: 23784504.5
(22) Date of filing: 19.01.2023
(51) Int. Cl.: H04R 23/00

(54) **HEAT-SOUND CONVERTER**

(30) Priority: 06.04.2022 JP 2022063441
(71) Applicant: DENSO CORPORATION, Kariya-city, Aichi 448-8661 (JP)
(72) Inventor: NIWA Mitsunobu, Kariya- city, Aichi 4488661 (JP)
(74) Representative: Kuhnen & Wacker Patent- und Rechtsanwaltsbüro PartG mbB
(86) International application number: PCT/JP2023/001457
(87) International publication number: WO 2023/195209

(57) **Abstract**

A heat sound converter (1) converts heat into sound waves using thermoacoustic phenomena. The heat sound converter (1) includes a heater (2), a cooler (3) and a heat accumulator (4). Heat transfer portions (24), (34) that divide the sound wave passages (21), (31) into multiple sections are provided on an inner circumferential side of the outer circumference portions (23), (33) of the heater (2) and the cooler (3). In the heat accumulator (4), a heat transfer wall portion (43) for transferring heat to each of the heat transfer portions (24), (34) is formed at a position facing each of the heat transfer portions (24), (34) in a cross section perpendicular to an axial direction (L) along a formation direction of the intermediate sound wave passage (41). The heat transfer wall portion (43) has a thickness greater than a thickness of the cell wall (44) and is formed in a state in which it closes a part of the intermediate sound wave passage (41).

## Description

### CROSS REFERENCE TO RELATED APPLICATIONS

This application is based on Japanese Patent Application No. 2022-063441 filed on April 6, 2022, the disclosure of which is incorporated herein by reference.

### TECHNICAL FIELD

The present disclosure relates to a heat sound converter.

### BACKGROUND

A heat sound converter converts heat into sound waves using thermoacoustic phenomena. The sound waves produced by the heat sound converter are further converted into other energy such as electricity and used. The heat sound converter is configured by arranging a heater, which is a heat exchanger on a heating side, at one end of a heat accumulator through which a working fluid passes as sound waves, and a cooler, which is a heat exchanger on a cooling side, at the other end of the heat accumulator. The heat sound converter utilizes a temperature difference generated across the heat accumulator by the fluid flowing through the heater and the fluid flowing through the cooler to amplify the sound waves of the working fluid passing through the heat accumulator.

In order to improve the heat sound conversion efficiency in the heat sound converter, it is necessary to ensure an opening area (opening ratio) of a passage through which the working fluid passes in the heat accumulator, as well as it is important to effectively exchange heat between the fluid and the working fluid in the heater and between the fluid and the working fluid in the cooler. For example, in a heat exchange member of Patent Document 1, when the heat sound converter is configured by a stack (heat accumulator) and a heat exchange member (heat exchanger), the channel walls forming the plurality of minute passages in the stack are brought into proper contact with a plate portion of the heat exchange member. Furthermore, the minute passages through which the working fluid in the stack passes are arranged not to overlap with the plate portions of the heat exchange member, so that the opening area of the minute passages is not reduced.

### PRIOR ART DOCUMENT

### PATENT DOCUMENT

Patent Document 1: JP 2020-125877 A

### SUMMARY OF INVENTION

In Patent Document 1, in order to bring the plate portion of the heat exchange member into contact with the channel wall of the stack, a thickness of the plate portion must be made small. Further, in Patent Document 1, in order to bring the tip of the plate portion of the heat exchange member into contact with the channel wall of the stack, the tip is processed into a tapered shape so that it is thinner than the remaining base end. In order to increase the opening area of the minute passage of the stack, it is necessary to reduce the thickness of the channel wall of the stack, and it is necessary to further reduce the thickness of the plate portion of the heat exchange member. For this reason, since the strength of the plate portion of the heat exchange member cannot be ensured, the thickness of the channel wall of the stack cannot be reduced, and it is difficult to increase the opening area of the minute passage of the stack.

An object of the present disclosure is to provide a heat sound converter that can both secure an opening area of an intermediate sound wave passage of a heat accumulator and promote a heat transfer between at least one of a heater and a cooler and a heat accumulator.

According to an aspect of the present disclosure,
a heat sound converter for converting heat into sound waves by utilizing a thermoacoustic phenomenon includes
a heater having a first sound wave passage formed on an inner circumferential side of a first outer circumference portion and through which the sound waves pass, and a high temperature side fluid passage formed on the first outer circumference portion and through which a first fluid flows,
a cooler having a second sound wave passage formed on an inner circumferential side of a second outer circumference portion through which the sound waves pass, and a low temperature side fluid passage formed on the second outer circumference portion and through which a second fluid having a temperature lower than that of the first fluid flows, and
a heat accumulator disposed between the heater and the cooler, having an intermediate sound wave passage formed between a plurality of cell walls through which the sound waves pass via the first sound wave passage and the second sound wave passage.

At least one of the heater and the cooler is provided with a heat transfer portion that is provided on an inner circumferential side of the first outer circumference portion or the second outer circumference portion and divides the first sound wave passage or the second sound wave passage into a plurality of sections.

In the heat accumulator, at a position facing the heat transfer portion in a cross section perpendicular to an axial direction along a direction in which the intermediate sound wave passage is formed, a heat transfer wall portion is formed which is thicker than the cell wall and is used to block a portion of the intermediate sound wave passage and conduct heat transfer with the heat transfer portion.

In the heat sound converter of one aspect described above, a heat transfer portion that divides the first sound wave passage or the second sound wave passage into multiple sections is provided on the inner circumferential side of at least one of the first outer circumference portion of the heater and the second outer circumference portion of the cooler. Further, a heat transfer wall portion is formed in the heat accumulator at a position facing the heat transfer portion. The heat transfer wall portion closes a part of the intermediate sound wave passage and is formed to be thicker than the cell wall. Furthermore, by the heat transfer portion and the heat transfer wall portion being in face-to-face contact with each other, it is possible to promote heat transfer between at least one of the heater and the cooler and the heat accumulator.

In addition, there is no need to face the heat transfer portion to the cell wall, and there is no need to ensure a large thickness for the cell wall. Therefore, while ensuring the strength of the heat transfer portion of at least one of the heater and the cooler and the strength of the heat transfer wall portion of the heat accumulator, the thickness of the plurality of cell walls in the heat accumulator is reduced, and the opening area of the intermediate sound wave passage of the heat accumulator can be secured.

Therefore, according to the heat sound converter of the above aspect, it is possible to both secure the opening area of the intermediate sound wave passage of the heat accumulator and promote heat transfer between the heat accumulator and at least one of the heater and the cooler.

### BRIEF DESCRIPTION OF THE DRAWINGS

The above and other objects, features and advantages of the present disclosure will become more apparent from the following detailed description made with reference to the accompanying drawings. In the drawings:
FIG. 1 is an explanatory diagram showing a loop-type thermoacoustic power generation device according to a first embodiment;
FIG. 2 is a sectional view taken along a line II-II in FIG. 6, showing a heat sound converter according to the first embodiment;
FIG. 3 is a cross-sectional view taken along a line III-III in FIG. 6, showing the heat sound converter according to the first embodiment;
FIG. 4 is a cross-sectional view taken along a line IV-IV in FIG. 2, showing a heat accumulator of the heat sound converter according to the first embodiment;
FIG. 5 is an enlarged cross-sectional view of a portion in FIG. 4 according to the first embodiment;
FIG. 6 is a sectional view taken along a line VI-VI in FIG. 2, showing a heater of the heat sound converter according to the first embodiment;
FIG. 7 is an explanatory diagram showing a straight tube type thermoacoustic power generation device according to the first embodiment;
FIG. 8 is a cross-sectional view taken along a line VIII-VIII in FIG. 10, showing a heat sound converter according to a second embodiment;
FIG. 9 is a sectional view taken along a line IX-IX in FIG. 10, showing the heat sound converter according to the second embodiment;
FIG. 10 is a cross-sectional view taken along a line X-X in FIG. 8, showing a heater of the heat sound converter according to the second embodiment;
FIG. 11 is a cross-sectional view corresponding to the cross section taken along the line II-II in FIG. 6, showing the heat sound converter according to a third embodiment;
FIG. 12 is a cross-sectional view corresponding to the cross section taken along the line III-III in FIG. 6, showing the heat sound converter according to the third embodiment;
FIG. 13 is an enlarged cross-sectional view of a portion in FIG. 11 according to the third embodiment;
FIG. 14 is a cross-sectional view corresponding to the cross section taken along the line II-II in FIG. 6, showing the heat sound converter according to a fourth embodiment; and
FIG. 15 is an enlarged cross-sectional view of a portion in FIG. 14 according to the fourth embodiment.

### DETAILED DESCRIPTION

A preferred embodiment of the above-mentioned heat sound converter will be described with reference to the drawings.

### <First Embodiment>

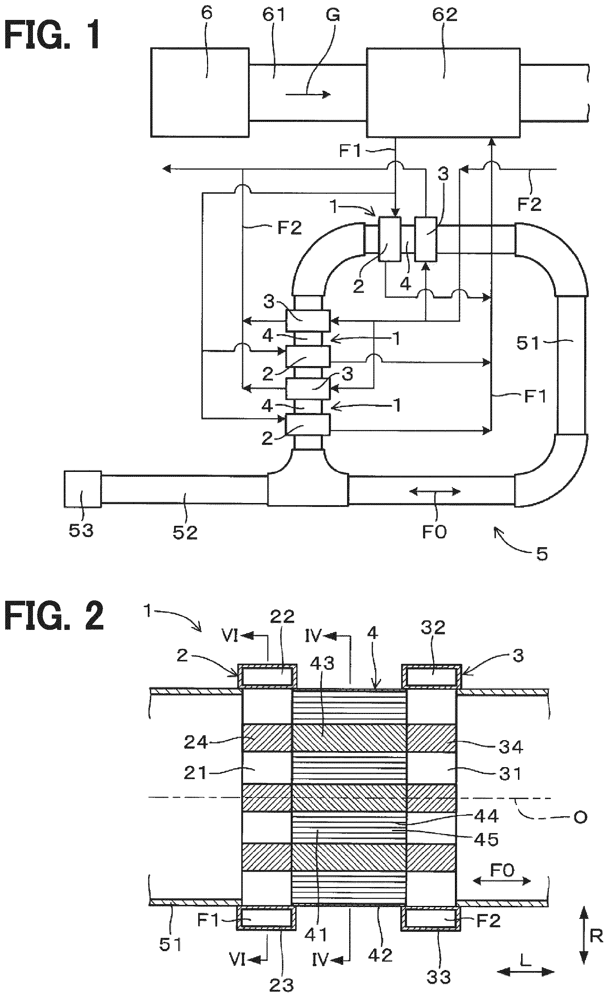

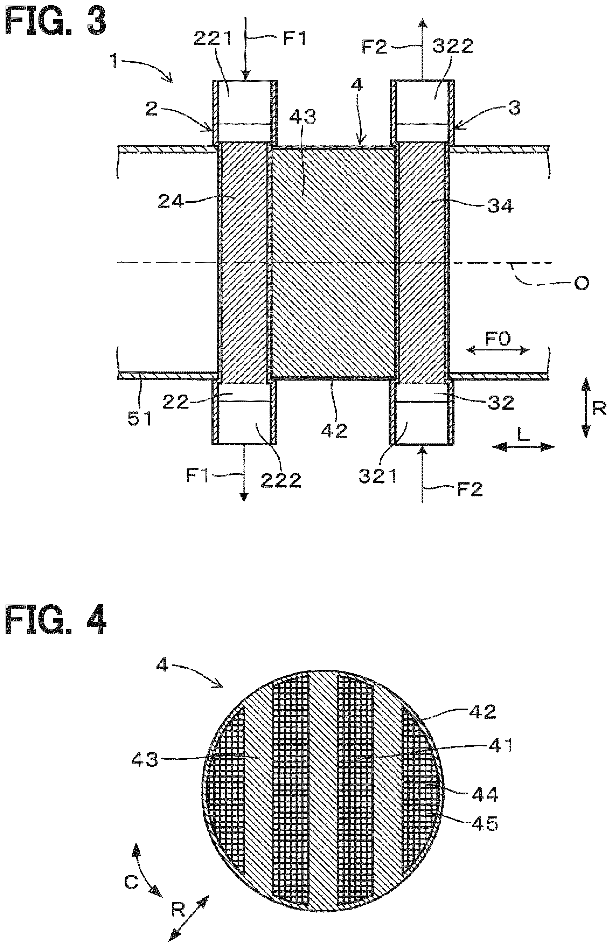

As shown in FIGS. 2 to 6, the heat sound converter 1 of the present embodiment converts heat into sound waves using thermoacoustic phenomena. The heat sound converter 1 includes a heater 2, a cooler 3, and a heat accumulator 4. The heater 2 includes a first sound wave passage 21 formed on an inner circumferential side of a first outer circumference portion 23 and through which the sound waves pass, and a high temperature side fluid passage 22 formed in the first outer circumference portion 23 and through which the first fluid F1 flows. The cooler 3 includes a second sound wave passage 31 formed on an inner circumferential side of the second outer circumference portion 33 and through which the sound waves pass, and a low temperature side fluid passage 32 formed in the second outer circumference portion 33 and through which a second fluid F2 having a lower temperature than the first fluid F1 flows. The heat accumulator 4 is disposed between the heater 2 and the cooler 3, and has an intermediate sound wave passage 41 formed between a plurality of cell walls 44 and through which sound waves pass through the first sound wave passage 21 and the second sound wave passage 31.

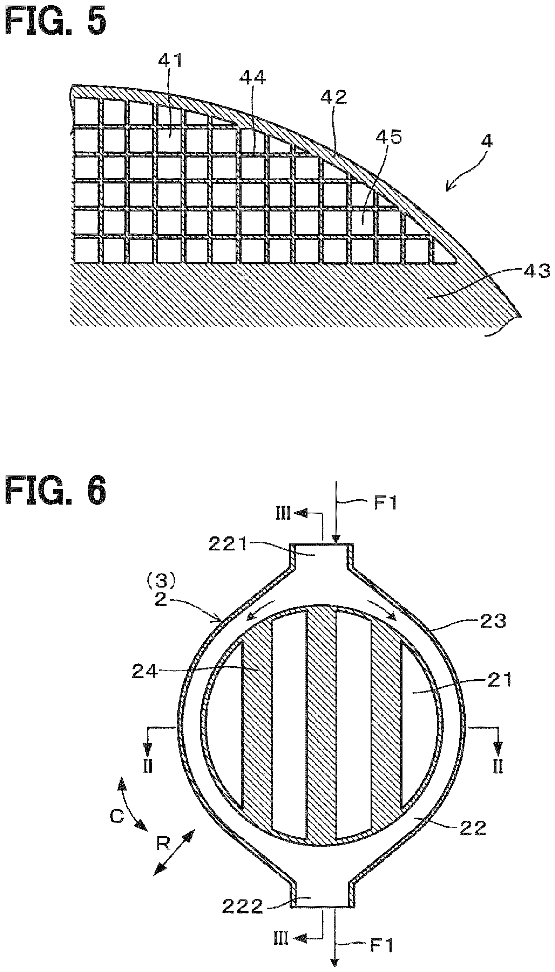

A first heat transfer portion 24 that partitions the first sound wave passage 21 into a plurality of sections is provided on the inner circumferential side of the first outer circumference portion 23 of the heater 2. Furthermore, a second heat transfer portion 34 is provided on the inner circumferential side of the second outer circumference portion 33 of the cooler 3 to partition the second sound wave passage 31 into a plurality of sections. As shown in FIG. 5, in the heat accumulator 4, at a position facing each heat transfer portion 24, and 34 in a cross section perpendicular to an axial direction L along a formation direction of the intermediate sound wave passage 41, a heat transfer wall portion 43 is formed for performing heat transfer with the first heat transfer portion 24 of the heater 2 and the second heat transfer portion 34 of the cooler 3. The heat transfer wall portion 43 has a thickness greater than a thickness of the cell wall 44 and is formed in a state in which it closes a part of the intermediate sound wave passage 41.

The heat sound converter 1 of the present embodiment will be explained in detail below.

### (Heat sound converter 1 and thermoacoustic power generation device 5)

As shown in FIG. 1, the heat sound converter 1 of the present embodiment constitutes a thermoacoustic power generation device 5 that generates power by utilizing sound waves. One or more heat sound converters 1 are disposed midway through a piping that constitutes the thermoacoustic power generation device 5. The thermoacoustic power generation device 5 of the present embodiment is of a loop type, and includes an annular pipe 51 formed in an annular shape, a heat sound converter 1 disposed in the middle of the annular pipe 51, and a generator 53 connected to a branch pipe 52 branched from the annular pipe 51.

The heat sound converter 1 is used to amplify sound waves caused by a working fluid F0 circulating in the annular pipe 51. The heat sound converter 1 amplifies the sound waves caused by the working fluid F0 by expanding and contracting the working fluid F0, which is a gas, using the temperature difference between both ends of the heat accumulator 4 in an axial direction L. The temperature difference between both ends of the heat accumulator in the axial direction L is generated by heating the heat accumulator 4 and the working fluid F0 by the first fluid F1 in the heater 2 and cooling the heat accumulator 4 and the working fluid F0 by the second fluid F2 in the cooler 3.

The generator 53 is constituted by a linear generator that converts vibrations caused by sound waves into electricity using electromagnetic induction. The sound waves amplified by the heat sound converter 1 are then utilized by the generator 53 and converted into electricity.

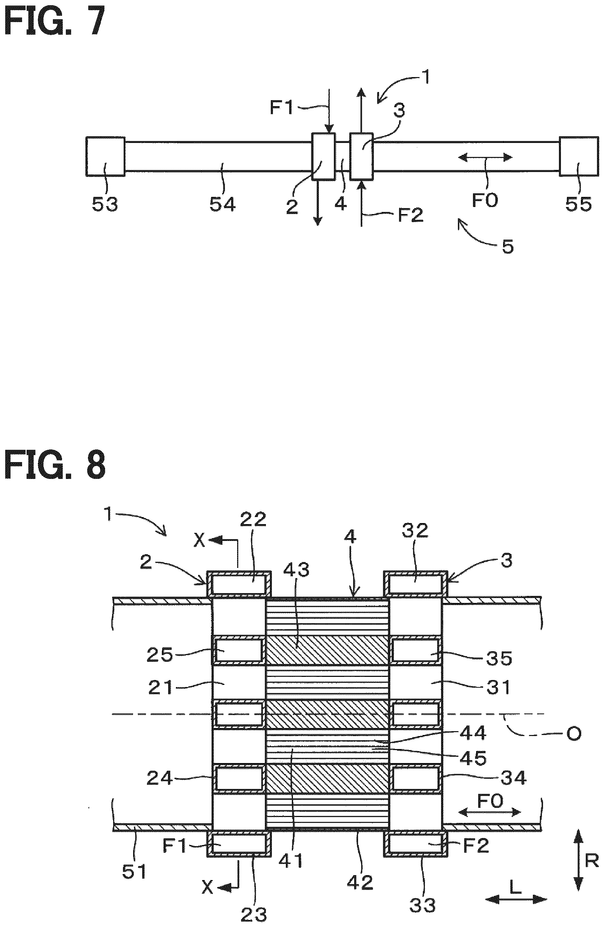

In addition, as shown in Figure 7, the thermoacoustic power generation device 5 may be of a straight tube type that includes a straight pipe 54, which is a piping formed in a straight line, a heat sound converter 1 arranged midway along the straight pipe 54, a sound wave generator 55 connected to one end of the straight pipe 54, and a generator 53 connected to the other end of the straight pipe 54.

### (First fluid F1 and second fluid F2)

As shown in FIG. 1, the first fluid F1 in the present embodiment utilizes an exhaust heat of exhaust gas G supplied from an exhaust heat source 6. Specifically, the first fluid F1 is a heat transfer oil that exchanges heat with the exhaust gas G discharged from the exhaust heat source 6 to an exhaust pipe 61 and is heated by the exhaust heat of the exhaust gas G. A heat exchanger 62 for exchanging heat between the exhaust gas G and the heat transfer oil is disposed in the exhaust pipe 61.

The exhaust heat source 6 includes a firing furnace, an aluminum melting furnace, and the like, for example, as an industrial furnace that heats by burning fuel. The exhaust heat source 6 may be any of various facilities that emit exhaust gas G due to combustion. In the present embodiment, the second fluid F2 is circulating water used in a factory. Various fluids having a temperature lower than that of the exhaust gas G may be used as the second fluid F2. Further, the temperature of the second fluid F2 is lower than the temperature of the working fluid F0. An inert gas such as helium or argon is used as the working fluid F0 of the heat sound converter 1 and the thermoacoustic power generation device 5 of the present embodiment.

In the present embodiment, a direction along a central axis O of the heat accumulator 4 is referred to as an axial direction L, a direction around the central axis O of the heat accumulator 4 is referred to as a circumferential direction C, and a radial direction centered on the central axis O of the heat accumulator 4 is referred to as a radial direction R. The central axis O of the heater 2 and the central axis O of the cooler 3 are coaxial with the central axis O of the heat accumulator 4, and the central axis O of the heat accumulator 4 also indicates the central axis O of the heater 2 and the central axis O of the cooler 3.

### (Heat accumulator 4)

As shown in FIGS 2, 4 and 5, the heat accumulator 4 has an outer peripheral wall portion 42 that constitutes the wall portion on the outer circumferential side, a plurality of heat transfer wall portions 43 that are bridged across the outer peripheral wall portion 42 on the inner peripheral side of the outer peripheral wall portion 42, and a cell wall 44 that forms a plurality of through holes 45 along the axial direction L on the inner circumferential side of the outer peripheral wall portion 42. The outer peripheral wall portion 42 is formed in a cylindrical shape.

A plurality of the heat transfer wall portions 43 are arranged in parallel from one side to the other side in the radial direction R of the outer peripheral wall portion 42. The heat transfer wall portion 43 of the present embodiment is made of the same material as the cell wall 44 and is continuously formed over the entire length of the heat accumulator 4 in the axial direction L. With this configuration, the heat transfer wall portion 43 of the heat accumulator 4 continuously contacts the first heat transfer portion 24 of the heater 2 and the second heat transfer portion 34 of the cooler 3, and the heat transfer between the heat accumulator 4 and the heater 2 and between the heat accumulator 4 and the cooler 3 can be promoted. The heat transfer wall portion 43 is formed in contact with the first heat transfer portion 24 of the heater 2 and the second heat transfer portion 34 of the cooler 3. The thickness of the heat transfer wall portion 43 may be, for example, 10 to 500 times the thickness of the cell wall 44.

The cell wall 44 is formed as a polygonal wall portion such as a lattice shape or a honeycomb shape. The cell wall 44 is formed continuously over the entire length of the heat accumulator 4 in the axial direction L. The thickness of the cell wall 44 may be, for example, 1/10 to 1/2 times the width of a through hole 45. The heat accumulator 4 is made of a ceramic material. The heat accumulator 4 may be made of a metal material. The intermediate sound wave passage 41 of the heat accumulator 4 is formed by a plurality of through holes 45 surrounded by the cell wall 44, the outer peripheral wall portion 42 and the heat transfer wall portion 43. Most of the through holes 45 are formed surrounded by intersecting cell walls 44.

The opening ratio of the heat accumulator 4 is expressed as the opening area of the intermediate sound wave passage 41 in the cross-sectional area of the cross section perpendicular to the axial direction L of the heat accumulator 4, in other words, the total opening area of the plurality of through holes 45. The cell wall 44 and the heat transfer wall portion 43 of the present embodiment are formed so that the opening ratio of the heat accumulator 4 is within the range of 50 to 90%.

### (Heater 2)

As shown in FIGS. 2, 3 and 6, the heater 2 has a first outer circumference portion 23 formed in an annular shape, and a first heat transfer portion 24 formed on the inner circumferential side of the first outer circumference portion 23, with multiple portions arranged in parallel, from one side to the other side in the radial direction R of the first outer circumference portion 23. Within the first outer circumference portion 23, a high temperature side fluid passage 22 through which the first fluid F1 flows is formed in an annular shape. A first fluid passage inlet 221 is formed on one side of the first outer circumference portion 23 in the radial direction R for allowing the first fluid F1 to flow into the high temperature side fluid passage 22, and a first fluid passage outlet 222 is formed on the other side of the first outer circumference portion 23 in the radial direction R for allowing the first fluid F1 to flow out from the high temperature side fluid passage 22. In other words, the first fluid passage inlet 221 and the first fluid passage outlet 222 are formed at positions that are out of phase with each other by 180° in the circumferential direction C.

A plurality of first heat transfer portions 24 of the heater 2 are formed in a state of facing and contacting a plurality of the heat transfer wall portions 43 of the heat accumulator 4. The first heat transfer portion 24 in the present embodiment is formed into a solid shape. In the present embodiment, the shape of a cross section perpendicular to the axial direction L of the first heat transfer portion 24 is substantially the same as the shape of a cross section perpendicular to the axial direction L of the heat transfer wall portion 43. The width of the first heat transfer portion 24 is approximately the same as the width of the heat transfer wall portion 43 of the heat accumulator 4. The width of the first heat transfer portion 24 may be the same as the width of the heat transfer wall portion 43, and may be appropriately determined within a range not exceeding the width of the heat transfer wall portion 43.

The first sound wave passage 21 of the heater 2 is formed as an opening portion surrounded by the first outer circumference portion 23 and the first heat transfer portion 24. The first sound wave passage 21 is formed at a position facing the cell wall 44 and the through hole 45 of the heat accumulator 4 in the axial direction L.

In the heater 2, when the first fluid F1 flowing into the high temperature side fluid passage 22 from the first fluid passage inlet 221 flows through the high temperature side fluid passage 22, the first outer circumference portion 23 and the first heat transfer portion 24 are heated. Then, the working fluid F0 passing through the first sound wave passage 21 is heated by heat transfer from the first outer circumference portion 23 and the first heat transfer portion 24, and the heat accumulator 4 is heated by the first outer circumference portion 23 and the heat transfer wall portion 43 of the heat accumulator 4 is heated by the first heat transfer portion 24. Furthermore, the first fluid F1 used for heating flows out from the high temperature side fluid passage 22 to the first fluid passage outlet 222.

### (Cooler 3)

As shown in FIGS. 2, 3 and 6, the cooler 3 has a second outer circumference portion 33 formed in an annular shape, and a second heat transfer portion 34 formed on the inner circumferential side of the second outer circumference portion 33, with multiple portions arranged in parallel, from one side to the other side in the radial direction R of the second outer circumference portion 33. FIG. 6 shows the heater 2, but the cooler 3 has a similar structure to the heater 2. Within the second outer circumference portion 33, a low-temperature side fluid passage 32 through which the second fluid F2 flows is formed in an annular shape. A second fluid passage inlet 321 is formed on one side of the second outer circumference portion 33 in the radial direction R for allowing the second fluid F2 to flow into the low temperature side fluid passage 32, and a second fluid passage outlet 322 is formed on the other side of the second outer circumference portion 33 in the radial direction R for allowing the second fluid F2 to flow out from the low temperature side fluid passage 32. In other words, the second fluid passage inlet 321 and the second fluid passage outlet 322 are formed at positions that are out of phase with each other by 180° in the circumferential direction C.

A plurality of second heat transfer portions 34 of the cooler 3 are formed in a state of facing and contacting a plurality of the heat transfer wall portions 43 of the heat accumulator 4. The second heat transfer portion 34 in the present embodiment is formed into a solid shape. In the present embodiment, the shape of a cross section perpendicular to the axial direction L of the second heat transfer portion 34 is substantially the same as the shape of a cross section perpendicular to the axial direction L of the heat transfer wall portion 43. The width of the second heat transfer portion 34 is approximately the same as the width of the heat transfer wall portion 43 of the heat accumulator 4. The width of the second heat transfer portion 34 may be the same as the width of the heat transfer wall portion 43, and may be appropriately determined within a range not exceeding the width of the heat transfer wall portion 43.

The second sound wave passage 31 of the cooler 3 is formed as an opening portion surrounded by the second outer circumference portion 33 and the second heat transfer portion 34. The second sound wave passage 31 is formed at a position facing the cell wall 44 and the through hole 45 of the heat accumulator 4 in the axial direction L.

In the cooler 3, when the second fluid F2 flowing from the second fluid passage inlet 321 into the low temperature side fluid passage 32 flows through the low temperature side fluid passage 32, the second outer circumference portion 33 and the second heat transfer portion 34 are cooled. The working fluid F0 passing through the second sound wave passage 31 is cooled by heat transfer to the second outer circumference portion 33 and the second heat transfer portion 34, and the heat accumulator 4 is cooled by the second outer circumference portion 33 and the heat transfer wall portion 43 of the heat accumulator 4 is cooled by the second heat transfer portion 34. In addition, the second fluid F2 used for cooling flows out from the low temperature side fluid passage 32 to the second fluid passage outlet 322.

The heater 2 and the cooler 3 used in the present embodiment have the same shape. The first heat transfer portion 24 of the heater 2 and the second heat transfer portion 34 of the cooler 3 are formed in the same shape.

### (Operational Effects)

In the heat sound converter 1 of the present embodiment, the first heat transfer portion 24 that divides the first sound wave passage 21 into multiple sections is provided on the inner circumferential side of the first outer circumference portion 23 of the heater 2, and a second heat transfer portion 34 that divides the second sound wave passage 31 into multiple sections is provided on the inner circumferential side of the second outer circumference portion 33 of the cooler 3. Further, in the heat accumulator 4, the heat transfer wall portion 43 is formed at a position facing the first heat transfer portion 24 and the second heat transfer portion 34. The heat transfer wall portion 43 closes a part of the intermediate sound wave passage 41 and is formed to be thicker than the cell wall 44. Furthermore, the first heat transfer portion 24 and the second heat transfer portion 34 face and contact the heat transfer wall portion 43, thereby facilitating heat transfer between the heater 2 and the cooler 3 and the heat accumulator 4.

Furthermore, there is no need to face the first heat transfer portion 24 and the second heat transfer portion 34 to the cell walls 44, and there is no need to ensure that the cell walls 44 are thick. Therefore, while ensuring the strength of the first heat transfer portion 24 of the heater 2 and the second heat transfer portion 34 of the cooler 3, and the strength of the heat transfer wall portion 43 of the heat accumulator 4, the thickness of the multiple cell walls 44 in the heat accumulator 4 can be reduced, thereby ensuring the opening area of the intermediate sound wave passage 41 of the heat accumulator 4.

Therefore, according to the heat sound converter 1 of the present embodiment, it is possible to ensure the opening area of the intermediate sound wave passage 41 of the heat accumulator 4 while promoting heat transfer between the heater 2 and the cooler 3, and the heat accumulator 4. By ensuring the opening area of the intermediate sound wave passage 41, it is possible to appropriately ensure the efficiency of heat sound conversion for converting heat into sound.

Furthermore, even if the thickness of the cell walls 44 is reduced, the heat transfer wall portion 43 is thick, so that heat transfer between the heater 2 and the cooler 3, and the heat accumulator 4 can be effectively performed. Furthermore, since the first heat transfer portion 24 of the heater 2 and the second heat transfer portion 34 of the cooler 3 are formed in the same cross-sectional shape as the heat transfer wall portion 43, the intermediate sound wave passage 41 of the heat accumulator 4 is not blocked by the first heat transfer portion 24 and the second heat transfer portion 34. The configuration of the heat sound converter 1 of the present embodiment makes it possible to maximize the heat sound conversion efficiency.

One of the first heat transfer portion 24 of the heater 2 and the second heat transfer portion 34 of the cooler 3 does not necessarily have to be formed. In other words, the heat transfer portion in contact with the heat transfer wall portion 43 of the heat accumulator 4 may be formed on only one of the heater 2 and the cooler 3.

### <Second Embodiment>

In the present embodiment, the structures of the first heat transfer portion 24 of the heater 2 and the second heat transfer portion 34 of the cooler 3 are different from those in the first embodiment. Specifically, as shown in FIGS. 8 to 10, inside each of the plurality of first heat transfer portions 24 of the heater 2, a first branch fluid passage 25 is formed, which is branched from the high temperature side fluid passage 22 of the first outer circumference portion 23 and through which the first fluid F1 flows. In the heater 2 , the first fluid F 1 flowing into the high temperature side fluid passage 22 from the first fluid passage inlet 221 flows through the high temperature side fluid passage 22 and branches off from the high temperature side fluid passage 22 to flow into a plurality of first branch fluid passages 25. In addition, the first fluid F1 flowing through the high temperature side fluid passage 22 and the first fluid F1 flowing through the multiple first branch fluid passages 25 join together near the first fluid passage outlet 222 and flow out from the first fluid passage outlet 222.

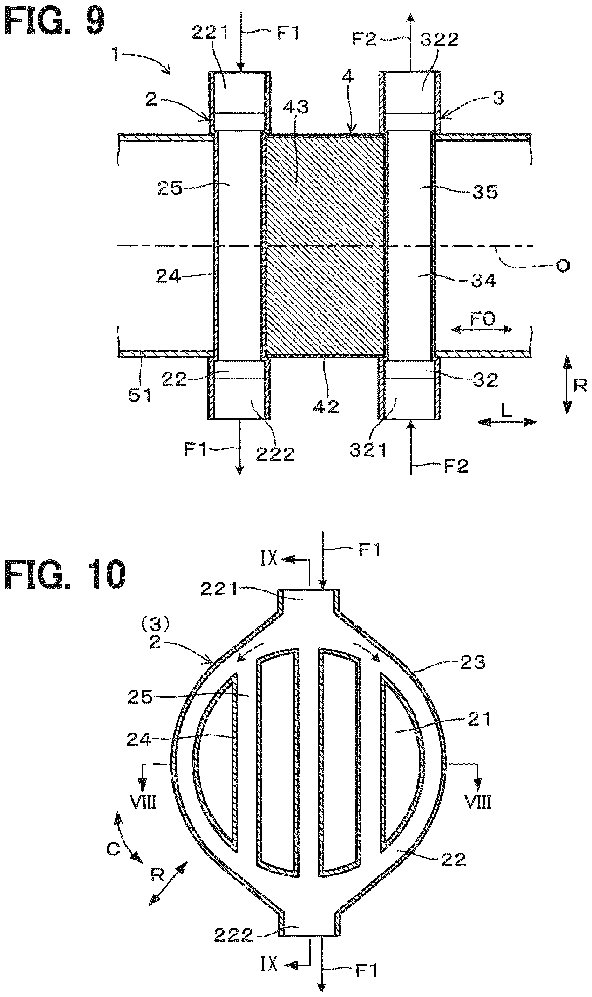

As shown in FIGS. 8 to 10, inside each of the multiple second heat transfer portions 34 of the cooler 3, a second branch fluid passage 35 is formed which branches off from the low temperature side fluid passage 32 of the second outer circumference portion 33 and through which the second fluid F2 flows. FIG. 10 shows the heater 2, but the cooler 3 has a similar structure to the heater 2. In the cooler 3, the second fluid F 2 flowing into the low temperature side fluid passage 32 from the second fluid passage inlet 321 flows through the low temperature side fluid passage 32 and branches off from the low temperature side fluid passage 32 to flow into a plurality of second branch fluid passages 35. In addition, the second fluid F2 flowing through the low temperature side fluid passage 32 and the second fluid F2 flowing through the multiple second branch fluid passages 35 join together near the second fluid passage outlet 322 and flow out from the second fluid passage outlet 322.

In the heat sound converter 1 of the present embodiment, the first heat transfer portion 24 reduces the temperature distribution in a cross section perpendicular to the axial direction L in the heater 2, and the second heat transfer portion 34 reduces the temperature distribution in a cross section perpendicular to the axial direction L in the cooler 3. In addition, the first fluid F1 flowing through the first branch fluid passage 25 can raise the temperature of the first heat transfer portion 24 of the heater 2 to a higher temperature. Heat transfer from the first heat transfer portion 24 of the heater 2 to the heat transfer wall portion 43 of the heat accumulator 4 can be further promoted. In addition, the second fluid F2 flowing through the second branch fluid passage 35 can lower the temperature of the second heat transfer portion 34 of the cooler 3. This can further promote heat transfer from the heat transfer wall portion 43 of the heat accumulator 4 to the second heat transfer portion 34 of the cooler 3.

Other configurations, functions and effects of the heat sound converter 1 of the present embodiment are the same as those of the first embodiment. In the present embodiment as well, components indicated by the same reference numerals as those in the first embodiment are the same as those in the first embodiment.

The branch fluid passage may be formed only in either the first heat transfer portion 24 of the heater 2 or the second heat transfer portion 34 of the cooler 3.

In addition, the configuration of each branch fluid passage 25, 35 in the present embodiment may be applied to the configuration of a heat sound converter 1 using a heat accumulator 4 of a third embodiment described later, or the configuration of a heat sound converter 1 using each thermal conductive material 461, 462 of a fourth embodiment described later.

### <Third Embodiment>

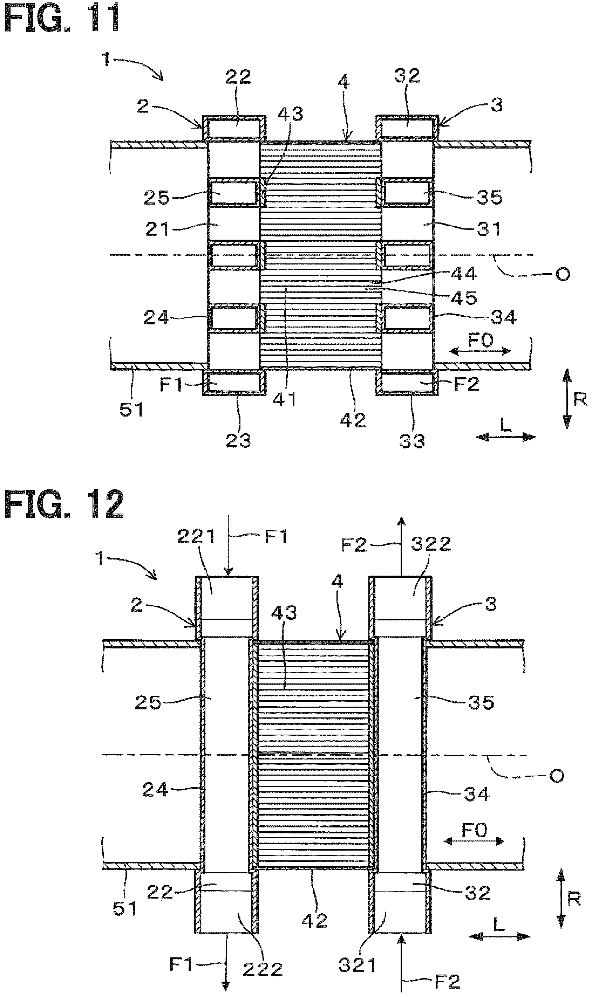

In the present embodiment, the structure of the heat transfer wall portion 43 of the heat accumulator 4 is different from that of the first embodiment. Specifically, as shown in FIGS. 11 to 13, the heat transfer wall portion 43 of the heat accumulator 4 is formed of the same material as the cell wall 44 at the end of the heat accumulator 4 in the axial direction L that faces the first heat transfer portion 24 and the second heat transfer portion 34. The heat transfer wall portions 43 in the present embodiment are formed as parts of the heat accumulator 4 at both ends in the axial direction L of the heat accumulator 4. In other words, the heat transfer wall portion 43 is divided into a portion that faces and contacts the first heat transfer portion 24 of the heater 2 and a portion that faces and contacts the second heat transfer portion 34 of the cooler 3.

The heat transfer wall portion 43 in the present embodiment is formed by filling both ends in the axial direction L of the through hole 45 surrounded by the cell wall 44 with a ceramic material of the same quality as the ceramic material constituting the heat accumulator 4. In other words, the heat transfer wall portion 43 is formed by filling a paste-like ceramic material into both ends of the axial direction L of the through hole 45 of the cell wall 44 located in a position facing the first heat transfer portion 24 and the second heat transfer portion 34 in the heat accumulator 4. In the present embodiment, the outer peripheral wall portion 42, the cell walls 44 and the heat transfer wall portion 43 of the heat accumulator 4 are made of the same ceramic material.

In the heat accumulator 4 of the present embodiment, the heat transfer wall portion 43 can be formed in a simple manner. Therefore, the heat transfer wall portion 43 is easy to form, and it is possible to achieve both ensuring the opening area of the intermediate sound wave passage 41 of the heat accumulator 4 and ensuring heat transfer between the heater 2 and the cooler 3, and the heat accumulator 4 with simple ingenuity.

Other configurations, functions and effects of the heat sound converter 1 of the present embodiment are the same as those of the first and second embodiments. In the present embodiment as well, components indicated by the same reference numerals as those in the first and second embodiments are the same as those in the first and second embodiments.

The heat transfer wall portion 43 in the present embodiment may be formed only at one end portion in the axial direction L of the heat accumulator 4. In other words, the heat transfer wall portion 43 may be formed so as to face and come into contact only with the first heat transfer portion 24 of the heater 2, or may be formed so as to face and come into contact only with the second heat transfer portion 34 of the cooler 3.

The configuration of the heat transfer wall portion 43 of the heat accumulator 4 of the present embodiment is applied to the heat sound converter 1 in which the branch fluid passages 25, 35 are formed in the heater 2 and the cooler 3 of the second embodiment. On the other hand, the configuration of the heat transfer wall portion 43 of the heat accumulator 4 of the present embodiment may be applied to the heat sound converter 1 of the first embodiment in which the heater 2 and the cooler 3 are not formed with the branch fluid passages 25, 35.

### <Fourth Embodiment>

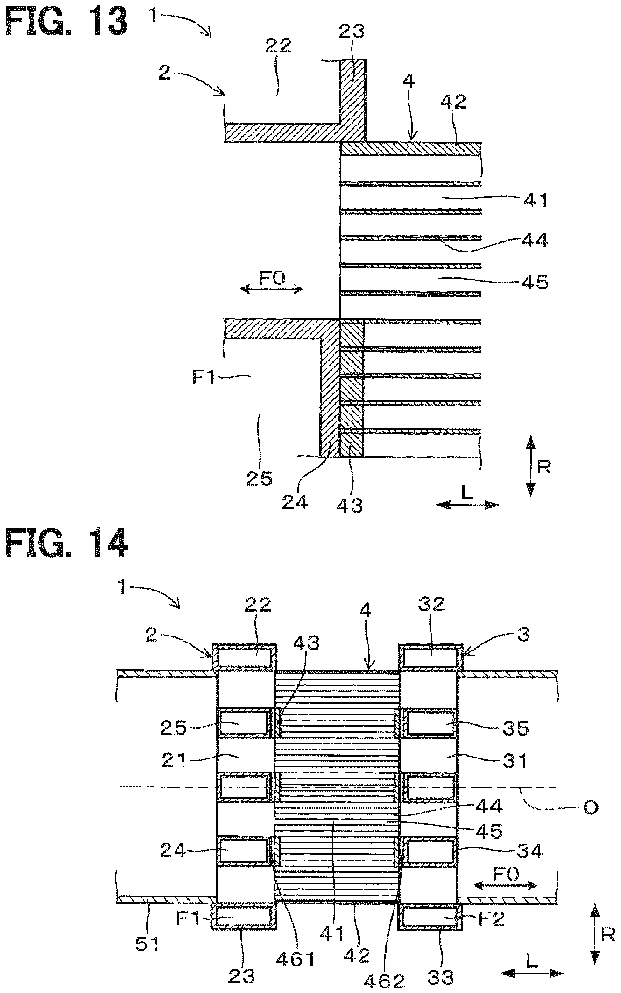

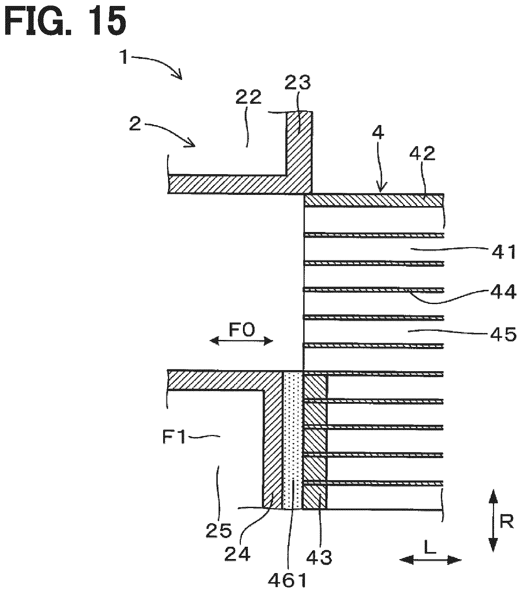

In the present embodiment, a separate member is disposed between the heater 2 and the cooler 3, and the heat accumulator 4. Specifically, as shown in FIGS. 14 and 15, a first thermal conductive material 461 made of a material softer than the material constituting the first heat transfer portion 24 and the material constituting the heat transfer wall portion 43 is sandwiched between the first heat transfer portion 24 of the heater 2 and the heat transfer wall portion 43 of the heat accumulator 4. In addition, a second thermal conductive material 462 made of a material softer than the material constituting the second heat transfer portion 34 and the material constituting the heat transfer wall portion 43 is sandwiched between the second heat transfer portion 34 of the cooler 3 and the heat transfer wall portion 43 of the heat accumulator 4.

In the present embodiment, the first heat transfer portion 24 of the heater 2 and the second heat transfer portion 34 of the cooler 3 are made of a metal material, and the heat transfer wall portion 43 of the heat accumulator 4 is made of a ceramic material. The thermal conductive materials 461, 462 arranged between the heater 2 and the heat accumulator 4, and between the cooler 3 and the heat accumulator 4, are made of a metal material, a polymer material, or the like that is softer than metal materials and ceramic materials. Each of the thermal conductive materials 461 and 462 is formed in the form of a sheet or gel as a heat transfer sheet or gel.

The cross-sectional shape of the first thermal conductive material 461 in the present embodiment perpendicular to the axial direction L is approximately the same as the cross-sectional shape of the first heat transfer portion 24 perpendicular to the axial direction L and the cross-sectional shape of the heat transfer wall portion 43 perpendicular to the axial direction L. The cross-sectional shape of the second thermal conductive material 462 perpendicular to the axial direction L is approximately the same as the cross-sectional shape of the second heat transfer portion 34 perpendicular to the axial direction L and the cross-sectional shape of the heat transfer wall portion 43 perpendicular to the axial direction L.

Each of the thermal conductive materials 461 and 462 is used to achieve close contact between the heater 2 and the heat accumulator 4 and between the cooler 3 and the heat accumulator 4. Specifically, minute irregularities, which are expressed as surface roughness, are formed on the end surface in the axial direction L of the first heat transfer portion 24 of the heater 2, the end surface in the axial direction L of the second heat transfer portion 34 of the cooler 3, and the end surface in the axial direction L of the heat transfer wall portion 43 of the heat accumulator 4. Therefore, the contact surfaces between the first heat transfer portion 24 and the heat transfer wall portion 43 and between the second heat transfer portion 34 and the heat transfer wall portion 43 may be in a point contact state when observed microscopically. In this case, there is a risk that the heat transfer between the first heat transfer portion 24 and the second heat transfer portion 34, and the heat transfer wall portion 43 will decrease due to an increase in contact thermal resistance.

Therefore, in the present embodiment, by arranging each thermal conductive material 461, 462 between the first heat transfer portion 24 and the heat transfer wall portion 43 and between the second heat transfer portion 34 and the heat transfer wall portion 43, it is possible to fill in the unevenness at the contact surface between the first heat transfer portion 24 and the heat transfer wall portion 43 and between the second heat transfer portion 34 and the heat transfer wall portion 43, thereby improving the heat transfer at the contact surface.

Other configurations, functions and effects of the heat sound converter 1 of the present embodiment are the same as those of the first to third embodiments. In the present embodiment as well, components indicated by the same reference numerals as those in the first to third embodiments are the same as those in the first to third embodiments.

In addition, the thermal conductive materials 461 and 462 in the present embodiment may be disposed only between the heater 2 and the heat accumulator 4 or between the cooler 3 and the heat accumulator 4.

The configuration of the thermal conductive materials 461 and 462 of the present embodiment is applied to the heat sound converter 1 in which the branch fluid passages 25 and 35 are formed in the heater 2 and the cooler 3 of the second embodiment. On the other hand, the configuration of the thermal conductive materials 461, 462 of the present embodiment may be applied to the heat sound converter 1 of the first embodiment in which the branch fluid passages 25, 35 are not formed in the heater 2 and the cooler 3.

Other:
Features of the present disclosure are shown below.

### [Item 1]

A heat sound converter (1) for converting heat into sound waves by utilizing a thermoacoustic phenomenon includes
a heater (2) having a first sound wave passage (21) formed on an inner circumferential side of a first outer circumference portion (23) and through which the sound waves pass, and a high temperature side fluid passage (22) formed on the first outer circumference portion and through which a first fluid (F1) flows;
a cooler (3) having a second sound wave passage (31) formed on an inner circumferential side of a second outer circumference portion (33) through which the sound waves pass, and a low temperature side fluid passage (32) formed on the second outer circumference portion and through which a second fluid (F2) having a temperature lower than that of the first fluid flows; and
a heat accumulator (4) disposed between the heater and the cooler, having an intermediate sound wave passage (41) formed between a plurality of cell walls (44) through which the sound waves pass via the first sound wave passage and the second sound wave passage.

At least one of the heater and the cooler is provided with a heat transfer portion (24, 34) that is provided on an inner circumferential side of the first outer circumference portion or the second outer circumference portion and divides the first sound wave passage or the second sound wave passage into a plurality of sections.

In the heat accumulator, at a position facing the heat transfer portion in a cross section perpendicular to an axial direction (L) along a direction in which the intermediate sound wave passage is formed, a heat transfer wall portion (43) is formed which is thicker than the cell wall and is used to block a portion of the intermediate sound wave passage and conduct heat transfer with the heat transfer portion.

### [Item 2]

In the heat sound converter according to item 1, the heat transfer wall portion is formed of the same material as the cell wall over an entire length of the heat accumulator in the axial direction.

### [Item 3]

In the heat sound converter according to item 1, the heat transfer wall portion is formed of the same material as the cell wall at an end portion of the heat accumulator in the axial direction opposite to the heat transfer portion.

### [Item 4]

In the heat sound converter according to any one of items 1 to 3, a thermal conductive material (461, 462) made of a material softer than the material constituting the heat transfer portion and the material constituting the heat transfer wall portion is sandwiched between the heat transfer portion and the heat transfer wall portion.

### [Item 5]

In the heat sound converter according to any one of items 1 to 4, a branch fluid passage (25, 35) is formed inside the heat transfer portion, branching from the high temperature side fluid passage or the low temperature side fluid passage and through which the first fluid or the second fluid flows.

### [Item 6]

In the heat sound converter according to any one of items 1 to 5, the first fluid utilizes exhaust heat of exhaust gas (G) supplied from an exhaust heat source (6), and the heat sound converter constitutes a thermoacoustic power generation device (5) that generates power by utilizing the sound waves.

The present disclosure is not limited to each embodiment, and it is possible to configure further different embodiments without departing from the gist of the present disclosure. Further, the present disclosure includes various modifications, modifications within the equivalence, and the like. Furthermore, the technical idea of the present disclosure further includes various combinations and various forms of constitutional elements that are derivable from the present disclosure.

Although the present disclosure has been described in accordance with the embodiments, it is understood that the present disclosure is not limited to such embodiments or structures. The present disclosure encompasses various modifications and variations within the scope of equivalents. In addition, while the various combinations and configurations, which are preferred, other combinations and configurations, including more, less or only a single element, are also within the spirit and scope of the present disclosure.

## Claims

1. A heat sound converter (1) for converting heat into sound waves by utilizing a thermoacoustic phenomenon, comprising:
a heater (2) having a first sound wave passage (21) formed on an inner circumferential side of a first outer circumference portion (23) and through which the sound waves pass, and a high temperature side fluid passage (22) formed on the first outer circumference portion and through which a first fluid (F1) flows;
a cooler (3) having a second sound wave passage (31) formed on an inner circumferential side of a second outer circumference portion (33) through which the sound waves pass, and a low temperature side fluid passage (32) formed on the second outer circumference portion and through which a second fluid (F2) having a temperature lower than that of the first fluid flows; and
a heat accumulator (4) disposed between the heater and the cooler, having an intermediate sound wave passage (41) formed between a plurality of cell walls (44) through which the sound waves pass via the first sound wave passage and the second sound wave passage; wherein
at least one of the heater and the cooler is provided with a heat transfer portion (24, 34) that is provided on an inner circumferential side of the first outer circumference portion or the second outer circumference portion and divides the first sound wave passage or the second sound wave passage into a plurality of sections, and
in the heat accumulator, at a position facing the heat transfer portion in a cross section perpendicular to an axial direction (L) along a direction in which the intermediate sound wave passage is formed, a heat transfer wall portion (43) is formed which is thicker than the cell wall and is used to block a portion of the intermediate sound wave passage and conduct heat transfer with the heat transfer portion.

2. The heat sound converter according to claim 1, wherein
the heat transfer wall portion is formed of the same material as the cell wall over an entire length of the heat accumulator in the axial direction.

3. The heat sound converter according to claim 1, wherein
the heat transfer wall portion is formed of the same material as the cell wall at an end portion of the heat accumulator in the axial direction opposite to the heat transfer portion.

4. The heat sound converter according to any one of claims 1 to 3, wherein
a thermal conductive material (461, 462) made of a material softer than the material constituting the heat transfer portion and the material constituting the heat transfer wall portion is sandwiched between the heat transfer portion and the heat transfer wall portion.

5. The heat sound converter according to any one of claims 1 to 3, wherein
a branch fluid passage (25, 35) is formed inside the heat transfer portion, branching from the high temperature side fluid passage or the low temperature side fluid passage and through which the first fluid or the second fluid flows.

6. The heat sound converter according to any one of claims 1 to 3, wherein
the first fluid utilizes exhaust heat of exhaust gas (G) supplied from an exhaust heat source (6), and
the heat sound converter constitutes a thermoacoustic power generation device (5) that generates power by utilizing the sound waves.
